# DEMANDE DE BREVET EUROPEEN

(11) **EP 2 055 976 A1**
(43) Date de publication de la demande: **06.05.2009**
(21) Numéro de dépôt: 08167719.7
(22) Date de dépôt: 28.10.2008
(51) Int. Cl.: F16D 23/02

(54) **Dispositif de friction à haute capacité pour transmission de couple par glissement**

(30) Priorité: 29.10.2007 FR 0758653
(71) Demandeur: Peugeot Citroën Automobiles SA, 78140 Vélizy-Villacoublay (FR)
(72) Inventeur: Lelasseux, Xavier, 92150 Suresnes (FR); Mitchell, Clément, 92250 La Garenne Colombes (FR); Wascheul, Michael, 78260 Achères (FR)

(57) **Abrégé**

L'invention se rapporte à une boîte (4) de vitesses mécanique pilotée comportant :
- un arbre (7) primaire et un arbre (8) secondaire reliés entre eux par des engrenages formant les rapports de vitesse,
- ces engrenages comportant chacun une roue (10-13, 21, 22) solidaire en rotation d'un des arbres et un pignon fou (15-18, 23, 24) monté sur l'autre arbre qui engrènent entre eux, et
- des manchons de crabotage (27-29) associables chacun à deux pignons fous munis également de crabots (40),
- un organe (31) de friction associé à un rapport de démultiplication, et comprenant :
- (n) bagues coniques, ci-après dénommées rotors (46₁, 46₂, 46₃, 46₄), liées en rotation à un moyeu (40) lui-même lié en rotation à l'arbre (7) portant l'organe de friction,
- (n-1) bagues coniques, ci-après dénommées stators (44₁, 44₂, 44₃), liées en rotation au pignon fou (24) du rapport de démultiplication auquel est associé l'organe (31),

les bagues coniques étant disposées concentriquement les unes à l'intérieur des autres, en respectant une alternance rotor/stator du moyeu (40) vers le pignon fou (24),
l'organe de friction (31) comprenant en outre un manchon (42) en liaison glissière avec le moyeu (40), ce manchon (42) permettant d'exercer un effort axial sur le rotor de plus grand diamètre, afin de générer un couple par friction entre l'ensemble des bagues coniques,
l'organe de friction étant tel que le nombre n, déterminant le nombre total de bagues coniques, est au moins égal à 3.

## Description

La présente invention est relative à un dispositif de synchronisation pour une boîte de vitesses à dérivation de couple par un rapport supérieur. Elle concerne plus particulièrement un dispositif de friction à haute capacité pour transmission de couple par glissement.

L'invention a notamment pour but d'améliorer le ressenti des changements de rapports d'une boîte de vitesses en évitant les ruptures de couple.

L'invention trouve une application particulièrement avantageuse dans le domaine des boîtes de vitesses mécaniques pilotées pour véhicule automobile. Toutefois, l'invention peut également être mise en oeuvre avec les véhicules à deux roues motorisés.

Les véhicules connus comportent une chaîne de traction formée par un dispositif de propulsion (formé par un moteur thermique et/ou une machine électrique), un embrayage, et une boîte de vitesses qui entraîne les roues du véhicule. L'embrayage est relié d'une part au dispositif de propulsion et d'autre part à la boîte de vitesses, elle-même reliée aux roues.

Une boîte de vitesses comporte un arbre primaire relié à l'embrayage et un arbre secondaire relié aux roues du véhicule, ces deux arbres étant reliés entre eux par l'intermédiaire d'engrenages formant les rapports de vitesse.

Chaque engrenage comporte une roue liée en rotation à un des arbres et un pignon fou monté sur l'autre arbre. Des manchons de crabotage sont utilisés pour lier sélectivement les pignons fous à l'arbre sur lequel ils sont montés afin d'assurer le passage d'un rapport de vitesse.

A cet effet, le manchon est lié en rotation à son arbre mais est mobile axialement pour permettre l'accrochage avec le pignon fou. On parle de crabotage lorsque le manchon entre en coopération avec le pignon fou de sorte qu'un rapport de vitesse est engagé, et de décrabotage lorsque le manchon se dégage du pignon fou de sorte que le rapport est désengagé.

De telles boîtes sont connues pour introduire un temps de coupure de transmission de couple qui peut devenir important et surtout source d'inconfort notamment pour les puissances élevées.

Ce temps de coupure est lié à la synchronisation qui permet de rendre compatibles les vitesses de rotation différentes entre les arbres liés par les trains de réduction, et qui implique notamment les étapes de coupure des gaz, débrayage, passage de rapport, embrayage et remise des gaz.

Pour remédier à ce problème, il est connu d'utiliser un ou plusieurs organes de friction unique capable d'égaliser les vitesses de rotation des arbres par frottement, cet organe de friction étant positionné sur le rapport final de démultiplication ou bien sur un rapport intermédiaire.

L'organe de friction assure une dérivation de couple qui permet, en plus de transmettre du couple pendant le changement de rapport, de supprimer le choc inhérent à l'utilisation de crabots, source d'inconfort, tout en conservant une architecture conventionnelle.

Ainsi, lors d'un passage montant d'un rapport N vers N+1, l'organe de frottement transmet progressivement du couple par glissement (on utilise le fait que l'arbre primaire lié au moteur évolue à une vitesse de rotation plus importante que celui du pignon moteur du rapport final) jusqu'à provoquer la chute du régime d'arbre primaire.

Cette chute de régime permet au rapport N d'être désengagé et d'engager le rapport N+1 alors que du couple est transmis par un rapport supérieur. Dès que le rapport N+1 est engagé, l'organe de friction est progressivement désactivé et le couple est intégralement transmis par le rapport N+1.

De nombreux dispositifs aptes à transmettre du couple par glissement sont connus.

Dans les boîtes de vitesses mécaniques, il est par exemple connu d'utiliser des synchroniseurs multi cônes, qui permettent d'assurer la synchronisation des régimes de rotation des arbres primaire et secondaire avant d'engager un rapport. Ces synchroniseurs sont dits multi cônes car ils comportent plusieurs surfaces de frottement coniques. Cependant, ils présentent de faibles capacités de dissipation d'énergie et de transmission de couple ne permettant pas de transmettre la totalité du couple transmissible en provenance du moteur (qu'il soit thermique ou non) par glissement, le temps de glissement étant en outre limité.

Par ailleurs, on connaît les embrayages multi disques, très utilisés dans les boîtes de vitesses de véhicules à deux roues motorisés ou les boîtes de vitesses automatiques de véhicules à quatre roues, ces derniers étant conçus pour transmettre un couple important. Ils sont constitués d'un empilement de disques plans, alternativement liés en rotation à un arbre et à un moyeu qui tournent à des régimes de rotation différents. Un couple de frottement est obtenu en appliquant un effort axial sur les disques afin de les faire entrer en contact. Ce type de dispositif présente cependant l'inconvénient de nécessiter un effort axial important pour garantir la valeur souhaitée de couple transmissible. De plus, il est généralement nécessaire de prévoir un organe de pilotage, telle qu'une source de pression hydraulique, pour pouvoir appliquer cet effort axial. Cela pose donc un problème d'intégration et d'encombrement si l'on souhaite adapter un tel dispositif à l'intérieur d'une boîte de vitesses manuelle pour applications transversales.

L'objet de l'invention est donc de fournir un organe de friction permettant de transmettre la totalité du couple transmissible par glissement, qui soit compact, pilotable et facilement intégrable dans le cadre de l'architecture d'une boîte de vitesses à dérivation de couple.

Ainsi l'invention concerne une boîte de vitesses de type mécanique pilotée comportant :
- un arbre primaire destiné à être relié à un moteur thermique, et un arbre secondaire destiné à être relié aux roues du véhicule, ces deux arbres étant reliés entre eux par des engrenages formant les rapports de vitesse,
- ces engrenages comportant chacun une roue solidaire en rotation d'un des arbres et un pignon fou monté sur l'autre arbre qui engrènent entre eux, et
- des manchons de crabotage associables chacun à deux pignons fous munis également de crabots, ces manchons de crabotage assurant le changement des rapports de vitesse,
- un organe de friction associé à un rapport de démultiplication, cet organe de friction transmettant du couple de manière temporaire lors des changements de rapports via ce rapport de démultiplication,
caractérisée en ce que l'organe de friction comprend :
- (n) bagues coniques, ci-après dénommées rotors, liées en rotation à un moyeu lui-même lié en rotation à l'arbre portant l'organe de friction,
- (n-1) bagues coniques, ci-après dénommées stators, liées en rotation au pignon fou du rapport de démultiplication auquel est associé l'organe,
les bagues coniques étant disposées concentriquement les unes à l'intérieur des autres, en respectant une alternance rotor/stator du moyeu vers le pignon fou,
l'organe de friction comprenant en outre un manchon en liaison glissière avec le moyeu, ce manchon permettant d'exercer un effort axial sur le rotor de plus grand diamètre, afin de générer un couple par friction entre l'ensemble des bagues coniques,
l'organe de friction étant tel que le nombre n, déterminant le nombre total de bagues coniques, est au moins égal à 3.

Dans une réalisation, l'organe de friction comprend un flasque dont une face est solidaire du pignon fou du rapport de démultiplication auquel est associé l'organe, la face opposée de ce flasque comprenant une surface d'appui conique destiné à entrer en contact avec le rotor de plus petit diamètre.

Dans une réalisation, chaque stator comprend au moins un organe d'entraînement destiné à coopérer avec une cavité pratiquée dans le flasque, de manière à lier en rotation chaque stator au pignon fou.

Dans une réalisation, chaque rotor comprend au moins un organe d'entraînement destiné à coopérer avec une cavité pratiquée sur une face latérale du moyeu, de manière à lier en rotation chaque rotor au moyeu.

Dans une réalisation, l'arbre portant l'organe de friction comprend des moyens de lubrification de cet organe, disposés en regard de la surface conique du flasque.

Dans une réalisation, les moyens de lubrification de l'organe de friction comprennent un canal interne disposé dans l'arbre permettant l'alimentation en lubrifiant, ainsi qu'un ou plusieurs canaux radiaux permettant d'amener le lubrifiant à la surface de l'arbre sous l'action de la force centrifuge lors de la rotation de l'arbre.

Dans une réalisation, le moyeu comprend des canaux radialement inclinés permettant, sous l'action de la force centrifuge, d'alimenter en lubrifiant les surfaces de friction des bagues coniques.

Dans une réalisation, l'organe de frottement est associé au rapport le plus grand de la boîte de vitesses.

Dans une réalisation, l'organe de frottement est associé à un ou plusieurs rapports intermédiaires de la boîte de vitesses.

Un exemple de réalisation de l'invention est décrit de manière non limitative en relation avec les figures parmi lesquelles :
- la figure 1 est un schéma général d'une boîte de vitesses selon l'invention,
- la figure 2 montre une vue éclatée d'un organe de frottement selon l'invention, avec un nombre limité de bagues coniques pour la clarté de la figure,
- les figures 3a et 3b montrent un mode de réalisation de l'assemblage du pignon fou et de son flasque,
- la figure 4 est une vue partielle de la figure 2,
- la figure 5 montre une vue éclatée d'un organe de friction selon l'invention comportant sept bagues coniques,
- la figure 6 est une vue en coupe de l'organe de friction de la figure 5.

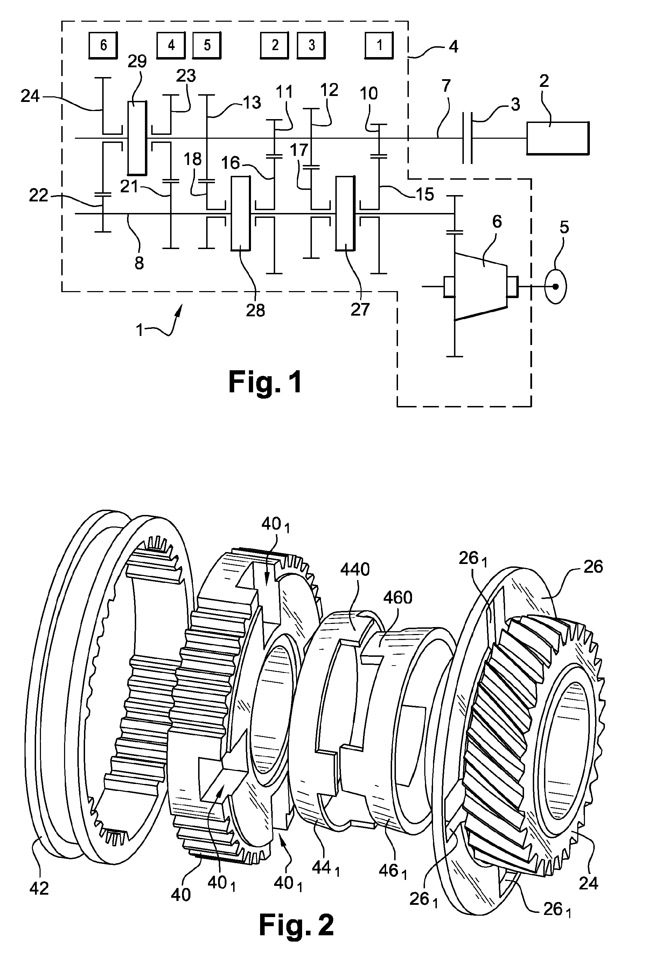

La figure 1 montre une chaîne 1 de traction d'un véhicule automobile formée par un moteur 2 thermique, un embrayage 3, une boîte 4 de vitesses délimitée par une ligne fermée discontinue, et des axes de sortie du différentiel vers les roues 5. L'embrayage 3 est relié d'une part au moteur 2 thermique et d'autre part à la boîte 4 de vitesses. Un différentiel 6 assure la liaison entre l'arbre secondaire 8 et les roues 5 du véhicule.

En variante, la chaîne 1 de traction est complétée par une machine électrique (non représentée) positionnée sur l'arbre d'entrée de la boîte 4 de vitesse entre l'embrayage 3 et la boîte 4 de vitesses.

Plus précisément, la boîte 4 de vitesses comporte un arbre 7 primaire relié à l'embrayage 3 et un arbre 8 secondaire relié aux roues 5. L'arbre 7 primaire est un arbre simple et non un arbre concentrique comme dans la plupart des boîtes de vitesses à double embrayage.

Ces deux arbres 7 et 8 sont reliés entre eux par l'intermédiaire d'engrenages formant les rapports de vitesse 1 à 6 encadrés sur la figure. Les rapports de 1^{ère}, 2^{ème} , 3^{ème} et 5^{ème} sont formés chacun par une roue 10-13 entraînée par l'arbre 7 primaire et un pignon fou 15-18 relié à l'arbre 8 secondaire. Tandis que les rapports de 4^{ème} et 6^{ème} sont formés chacun par une roue 21-22 entraînée par l'arbre 8 secondaire et un pignon fou 23-24 relié à l'arbre 7 primaire.

Les rapports de vitesses sont rassemblés par paire avec un seul manchon de crabotage 27-29 qui engage l'un des deux pignons fous des engrenages par déplacement axial dans une direction et l'autre pignon par déplacement dans la direction opposée.

Ces paires de pignons sont agencées d'une manière permettant d'engager deux rapports numériquement successifs avec des manchons différents: par exemple et de manière non limitative (1-4 ; 2-5 ; 3-6) ou (1-3 ; 4-6 ; 2-5), comme représenté.

Ainsi, les manchons 27 et 28 montés sur l'arbre secondaire 8 sont respectivement positionnés entre les rapports de 1^{ère} et 3^{ème} et entre les rapports de 2^{ème} et de 5^{ème}. Tandis que le manchon 29 monté sur l'arbre 7 primaire est positionné entre les rapports de 4^{ème} et de 6^{ème}.

De préférence, une combinaison de rapports de type (1-4 ; 2-5 ; 3-6) est telle qu'elle permet d'avoir un mouvement des actionneurs pilotant les crabots dans un même sens pour un passage successif : le sens de dégagement du rapport de 1^{ère} est le même que le sens d'engagement du rapport suivant la 2^{ème} et ainsi de suite.

En outre, un organe 31 de couplage par friction est disposé sur le rapport le plus élevé, dans l'exemple le rapport de 6^{ème}. Cet organe 31 de friction a pour rôle d'égaliser les vitesses lors des changements de rapports montants (autrement dit d'amener le manchon de crabotage et le pignon à engrener à des vitesses de rotation identiques avant de réaliser le crabotage) tout en permettant la transmission de couple lors de ces changements de rapport.

En variante, la boîte de vitesses comporte six rapports et l'organe 31 est associé au rapport de 3^{ème}, 4^{ème} ou de 5^{ème}.

En variante, la boîte 4 de vitesses comporte un deuxième arbre secondaire (non représenté), les paires de pignons fous étant alors réparties entre ces trois arbres.

L'organe de friction 31 objet de l'invention va maintenant être décrit en relation avec les figures 2, 3a, 3b, 4 et 5.

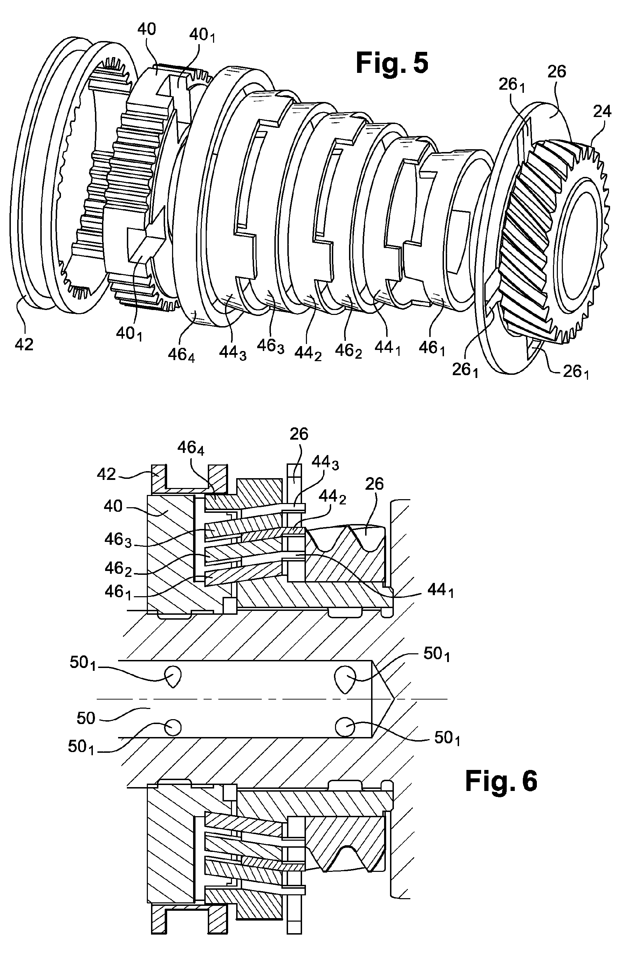

Cet organe est composé de bagues coniques 44₁, 44₂, 44₃, 46₁, 46₂, 46₃, 46₄ de deux catégories : les rotors 46₁, 46₂, 46₃, 46₄ et les stators 44₁, 44₂, 44₃. La répartition ente rotors et stators obéit à la règle suivante : pour n rotors, il est prévu (n-1) stators, ce qui porte le nombre total de bagues coniques à (2n-1). Selon l'invention, n est supérieur ou égal à 3 et, dans l'exemple représenté à la figure 5, n est égal à 4.

Les rotors 46₁, 46₂, 46₃, 46₄ sont liés en rotation à un moyeu 40, lui-même lié en rotation à l'arbre sur lequel est disposé le pignon fou du rapport auquel est associé l'organe de friction 31. Dans l'exemple, l'organe de friction 31 est associé au pignon fou 24 du rapport de démultiplication final, soit celui du 6^{ème} rapport. L'organe de friction est donc ici disposé sur l'arbre primaire 7. Le moyeu 40 est donc lié en rotation à ce même arbre. Afin de réaliser la liaison glissière entre le moyeu et l'ensemble des n rotors 46₁, 46₂, 46₃, 46₄, le moyeu comprend plusieurs cavités de direction radiale, dans l'exemple quatre rainures 40₁, qui sont destinés à coopérer avec des saillies de direction axiale, ou « tocs » 460, qui équipent chacun des rotors 46₁, 46₂, 46₃, 46₄.

Les stators 44₁, 44₂, 44₃ sont liés en rotation au pignon fou du rapport auquel est associé l'organe de friction 31, ici le pignon fou 24. Pour réaliser la liaison glissière entre les stators 44₁, 44₂, 44₃ et le pignon fou 24, ce dernier est solidaire d'un flasque 26. De même que le moyeu 40, le flasque est pourvu de plusieurs cavités de direction radiale, dans l'exemple quatre lumières 26₁, qui sont destinées à coopérer avec des saillies de direction axiale, ou « tocs » 440, qui équipent chacun des stators 44₁, 44₂, 44₃. Ces tocs sont similaires à ceux qui équipent les rotors.

Comme on peut le voir sur la figure 5, qui représente une vue éclatée de l'organe de friction 31, les stators et les rotors sont disposés de manière concentrique, en respectant une alternance stator/rotor, et sont de diamètres décroissants afin d'être imbriqués les uns à l'intérieur des autres. Le diamètre des bagues coniques est décroissant du moyeu 40 vers le pignon fou 24. Comme il y a n rotors pour n-1 stators, on a donc dans l'exemple un rotor de plus par rapport au nombre de stators. En conséquence, pour respecter l'alternance rotor/stator, les deux bagues coniques extrêmes de l'empilement, qui sont également celle de plus grand diamètre et celle de plus petit diamètre, sont donc logiquement deux des rotors, ici 46₁ et 46₂.

Chaque bague conique comprend deux surfaces de frottement, une surface externe et une surface interne, à l'exception du rotor de plus grand diamètre 46₄, qui ne dispose pas de surface de frottement externe. Pour chaque bague conique intermédiaire, la surface de frottement externe est destinée à coopérer avec la surface de frottement interne de la bague conique supérieure, tandis que la surface de frottement interne est destinée à coopérer avec la surface de frottement externe de la bague inférieure. La bague conique extrême située à proximité du flasque 26, c'est-à-dire le rotor 46₁ est en revanche destinée à coopérer d'un côté avec le stator 44₁ contigu et, de l'autre côté, avec une surface conique 26₂ disposée sur le flasque 26.

Il est à noter que la répartition de n rotors et n-1 stators est valable dans l'exemple car le rôle du dernier stator est assuré par la surface conique 26₂ du flasque de pignon 26. Cette dernière surface de frottement peut en variante être remplacée par un stator supplémentaire, en liaison avec le pignon fou 26, et n'utilisant que sa surface conique extérieure. Dans une telle configuration, on porte ainsi le nombre de stators à n, soit autant de rotors que de stators.

Le principe de fonctionnement de l'organe de friction est le suivant : en position de repos, lorsque l'organe 31 n'est pas sollicité pour transmettre du couple, l'ensemble des surfaces de frottement des bagues coniques ne sont pas en contact, tout en étant très proches les unes des autres. On s'assure ainsi que lorsque l'organe 31 est en position de repos, ou débrayée, il n'y a pas ou peu de couple résiduel de friction.

Lorsque l'on veut solliciter l'organe 31 afin qu'il génère un couple de friction, il faut exercer un effort axial qui va permettre la mise en contact de l'ensemble des surfaces de frottement, générant ainsi un couple de friction transmis du moyeu 40 vers le pignon fou 24. Afin de générer l'effort axial nécessaire, un manchon 42, ou baladeur, est en liaison glissière avec le moyeu 40 et est apte à venir en contact avec une surface d'appui du rotor de plus grand diamètre 46₄. Le manchon 42 est commandé de manière connue par un mécanisme d'entraînement de type fourchette et d'un actionneur, par exemple hydraulique ou électrique.

L'organe de friction 31 permet donc la synchronisation nécessaire au passage d'un rapport de vitesse, tout en transmettant un couple au pignon fou pendant ce passage. Le pignon fou 24 étant lié en rotation, par l'intermédiaire de la roue dentée 22, aux roues 5 du véhicule, et, le moyeu 40 étant lié au moteur 2, le couple de friction généré sera donc transmis aux roues, permettant ainsi d'éviter toute rupture de couple durant les passages de vitesse. Le couple transmissible est fonction de l'effort axial appliqué, du nombre et des dimensions des surfaces de frottement des bagues coniques, ainsi que de l'angle de cône de ces surfaces. Une fois les paramètres fixes déterminés, le couple transmis sera donc en pratique proportionnel à l'effort axial appliqué. Selon l'invention, le nombre de bagues coniques sera au moins égal à 5 (soit n=3), portant ainsi le nombre minimum de surfaces de frottement à 10, soit 2n. La multiplication du nombre de surface de frottement permet d'augmenter de manière importante la surface totale de frottement, et donc le couple transmissible, tout en conservant un encombrement axial et radial minimal facilitant l'intégration de l'organe 31 dans la boîte de vitesses.

Une augmentation supplémentaire de la surface totale de frottement peut également être obtenue en augmentant le diamètre des bagues coniques. En pratique, l'encombrement axial et radial que doit respecter l'organe de friction 31 déterminera de quelle manière on peut jouer sur le nombre et le diamètre des bagues coniques pour obtenir la valeur de couple transmissible souhaitée.

L'organe de friction selon l'invention présente donc l'avantage de nécessiter un effort axial limité pour un même couple de friction transmissible par rapport aux dispositifs connus, ainsi qu'une haute capacité énergétique, c'est-à-dire une capacité à dissiper de grandes valeurs d'énergie.

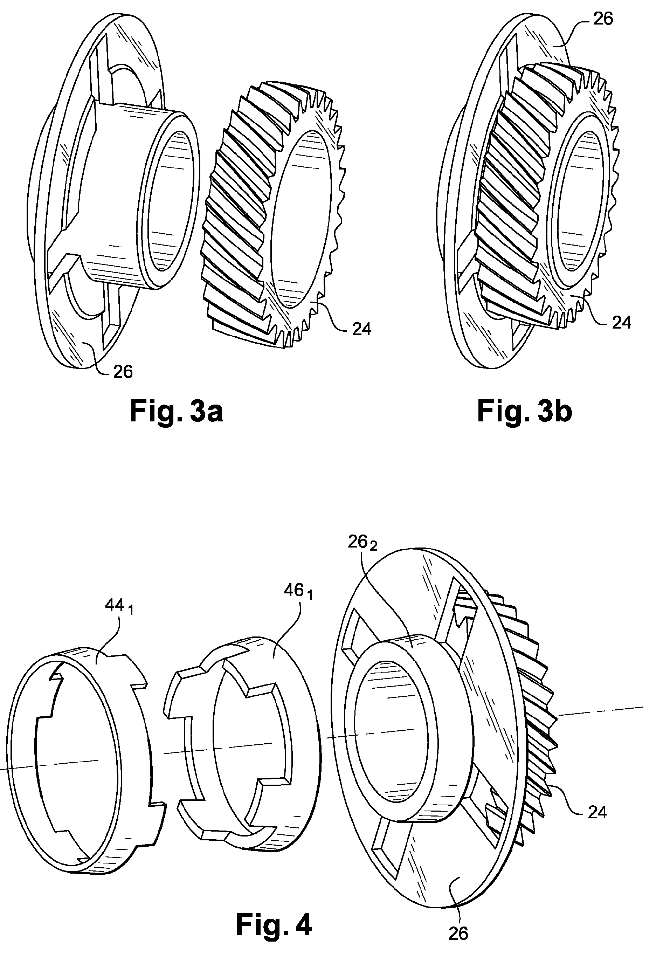

Les figures 3a et 3b montrent un mode de réalisation du pignon fou 24 avec son flasque 26. En effet, afin de réduire les coûts de production, et en tenant compte du fait que l'organe de friction 31 n'est pas forcément associé au pignon fou du dernier rapport, il est avantageux que le flasque 26 soit une pièce standard assemblée au pignon fou, par exemple par soudure. Ainsi, quel que soit le rapport de démultiplication auquel sera associé l'organe 31, le flasque 26 sera identique et apte à être associé à des pignons de différents diamètres.

La figure 6 représente une vue en coupe d'un arbre sur lequel est monté l'organe 31. On distingue les différents éléments constitutifs de ce dernier tel que décrits en relation avec la figure 5. La figure 6 montre en outre un mode de réalisation possible de la lubrification de l'organe 31. En effet, en raison de l'importance du couple transmissible, et notamment pour des questions de refroidissement et d'usure, il est nécessaire de lubrifier efficacement les surfaces de frottement des surfaces coniques. En raison de la compacité de l'organe 31, une réalisation avantageuse de cette lubrification consiste à ménager un alésage 50, non débouchant, dans l'arbre portant l'organe de friction afin d'en faire une canalisation de transport de lubrifiant. Le lubrifiant contenue dans cet alésage 50 est ensuite expulsé sous l'action de la force centrifuge vers la surface de l'arbre au moyen de canaux 50₁ radiaux qui relient l'alésage 50 à la surface externe de l'arbre, au niveau de la surface conique du flasque 26, associés par exemple à des canaux radialement inclinés dans le corps du moyeu, permettant d'alimenter les surfaces de friction en huile par effet centrifuge (non représenté). Ce mode de lubrification constitue un procédé efficace et économique.

## Revendications

1. Boîte (4) de vitesses de type mécanique pilotée comportant :
- un arbre (7) primaire destiné à être relié à un moteur (2) thermique, et un arbre (8) secondaire destiné à être relié aux roues (5) du véhicule, ces deux arbres (7, 8) étant reliés entre eux par des engrenages formant les rapports de vitesse,
- ces engrenages comportant chacun une roue (10-12, 21, 22) solidaire en rotation d'un des arbres et un pignon fou (15-17, 23, 24) monté sur l'autre arbre qui engrènent entre eux, et
- des manchons de crabotage (27-29) associables chacun à deux pignons fous munis également de crabots, ces manchons de crabotage (27-29) assurant le changement des rapports de vitesse,
- un organe (31) de friction associé à un rapport de démultiplication, cet organe (31) de friction transmettant du couple de manière temporaire lors des changements de rapports via ce rapport de démultiplication,
**caractérisée en ce que** l'organe (31) de friction comprend :
- n bagues coniques, ci-après dénommées rotors (46₁, 46₂, 46₃, 46₄), liées en rotation à un moyeu (40) lui-même lié en rotation à l'arbre (7) portant l'organe de friction,
- n-1 bagues coniques, ci-après dénommées stators (44₁, 44₂, 44₃), liées en rotation au pignon fou (24) du rapport de démultiplication auquel est associé l'organe (31),
les bagues coniques étant disposées concentriquement les unes à l'intérieur des autres, en respectant une alternance rotor/stator du moyeu (40) vers le pignon fou (24),
l'organe de friction (31) comprenant en outre un manchon (42) en liaison glissière avec le moyeu (40), ce manchon (42) permettant d'exercer un effort axial sur le rotor de plus grand diamètre, afin de générer un couple par friction entre l'ensemble des bagues coniques,
l'organe de friction étant tel que le nombre n, déterminant le nombre total de bagues coniques, est au moins égal à 3.

2. Boîte de vitesses selon la revendication 1, dans laquelle un flasque (26) dont une face est solidaire du pignon fou (24) du rapport de démultiplication auquel est associé l'organe (31), la face opposée de ce flasque comprenant une surface d'appui conique 26₂ destiné à entrer en contact avec le rotor de plus petit diamètre.

3. Boîte de vitesses selon la revendication 1, dans laquelle chaque stator (44₁, 44₂, 44₃) comprend au moins un organe d'entraînement (440) destiné à coopérer avec une cavité pratiquée dans le flasque (26₁), de manière à lier en rotation chaque stator au pignon fou (24).

4. Boîte de vitesses selon l'une des revendications 1à 3, dans laquelle chaque rotor (46₁, 46₂, 46₃, 46₄) comprend au moins un organe d'entraînement (460) destiné à coopérer avec une cavité pratiquée (40₁) sur une face latérale du moyeu (40), de manière à lier en rotation chaque rotor au moyeu (40).

5. Boîte de vitesses selon l'une des revendications précédentes, dans laquelle, l'arbre (7) portant l'organe de friction (31) comprend des moyens de lubrification de cet organe, disposés en regard de la surface conique (26₂) du flasque (26).

6. Boîtes de vitesses selon la revendication précédente, dans laquelle les moyens de lubrification de l'organe de friction comprennent un canal interne (50) disposé dans l'arbre permettant l'alimentation en lubrifiant, ainsi qu'un ou plusieurs canaux radiaux (50₁) permettant d'amener le lubrifiant à la surface de l'arbre sous l'action de la force centrifuge lors de la rotation de l'arbre.

7. Boîtes de vitesses selon la revendication précédente, dans laquelle le moyeu (40) comprend des canaux radialement inclinés permettant, sous l'action de la force centrifuge, d'alimenter en lubrifiant les surfaces de friction des bagues coniques.

8. Boîte de vitesses selon l'une des revendications précédentes, **caractérisé en ce que** l'organe (31) de frottement est associé au rapport le plus grand de la boîte de vitesses.

9. Boîte de vitesses selon l'une des revendications précédentes, **caractérisé en ce que** l'organe (31) de frottement est associé à un ou plusieurs rapports intermédiaires de la boîte de vitesses.
